# EUROPEAN PATENT APPLICATION

(11) **EP 2 599 884 A1**
(43) Date of publication of application: **05.06.2013**
(21) Application number: 12194632.1
(22) Date of filing: 28.11.2012
(51) Int. Cl.: C22B 1/248, C21C 5/52

(54) **A briquette and a method of manufacturing same, in particular suitable for inductive melting**

(30) Priority: 01.12.2011 DK 201170664
(71) Applicant: Vald. Birn A/S, 7500 Holstebro (DK)
(72) Inventor: Larsen, Kurt Bjarne, 7600 Struer (DK)
(74) Representative: Zacco Denmark A/S

(57) **Abstract**

The invention relates to a method of forming a briquette (100) comprising tyre wire (102) and metal shavings (104), wherein said briquette (100) is intended for being melted in connection with the casting of pieces, whereby the method comprises compression of tyre wire (102) and metal shavings (104) for forming a compressed briquette. The invention further relates to a briquette. Thereby a denser unit is provided that can be melted without the formation of a large amount of fumes from the rubber on the tyre wire. Thereby, due to the compression, a denser unit is provided which is easier to handle at the furnace and which can be melted in connection with induction melting.

## Description

The invention relates to a method of forming a briquette comprising tyre wire and a briquette comprising tyre wire for use in melting in the context of casting pieces.

### BACKGROUND OF THE ART

In connection with casting in iron, a raw material is to be used for melting and subsequent casting. Such raw material is often steel scrap. In connection with melting, the steel scrap is supplied to a melting furnace which may be based eg on inductive melting. Apart from steel scrap, an amount of graphite is typically also added.

The steel scrap usually used typically consists of one or more large units having a core size and a density of a certain magnitude. In particular in connection with inductive melting, it is important that the steel scrap units have a certain size and/or density, since a core of a certain size is required in order for it to be receptive towards induction and hence to melt.

A large amount of steel scrap is available as smaller pieces/units. It includes eg metal wire from tyres (in the following designated tyre wire), metal dust and metal shavings.

Tyre wire is the metal scrap produced when tyres from vehicles, including both cars and trucks, are granulated. Tyre wire is an inexpensive waste product of a high quality due to a low content of manganese compared to metal waste in general. It is therefore attractive to use tyre wire for melting in subsequent casting of pieces.

However, tyre wire does not readily lend itself for use in connection with induction melting due to it consisting of a large amount of small single strands that are tangled. This means that tyre wire units are too small and have a far too low density and that they do consequently not readily lend themselves for use in inductive melting.

In the context of inductive melting, there is a powerful magnetic field around the furnace which may make it difficult to handle the tyre wire around the furnace as it will be influenced by the magnetic field and dart around. Moreover, precisely in the context of tyre wire, there is often a major amount of tyre rubber and/or fabric residue on the tyre wire. The combination of such impurities and the tangled and fluffy structure of the tyre wire lead to the formation of toxic fumes and odour during melting which constitute environmental and health hazards.

When using shavings in bulk for inductive melting in an induction furnace, the shavings in combination with the cooling lubricant result in a further major amount of fumes. Moreover, both shavings and tyre wire have poor ability to absorb power due to the low density and will thus float on top of the molten metal waste and will melt very slowly only. All in all, tyre wire and metal shavings are options that are never chosen in connection with inductive melting which is why a high-quality product such as tyre wire most often ends up as a waste product.

### OBJECT OF THE INVENTION

It is the object of the invention to provide a solution to the above-referenced problem to the effect that it is also possible to use smaller pieces and rubber-coated pieces, including tyre wire, in connection with melting and hence casting of new metal pieces.

Herein is described a method of forming a briquette intended for use in inductive melting in an induction furnace in connection with subsequent casting of metal pieces. The briquette comprises tyre wire and metal shavings, and the manufacturing method comprises the following steps: 1) mixture of said tyre wire and said metal wire until a homogenous mixture is obtained; and 2) compression of said homogeneous mixture to form a compressed briquette.

By a homogeneous mixture is understood a mixture wherein the tyre wire is untangled to the effect that it is no longer lumped into separate lumps, thereby enabling that the metal shavings can be admixed with the tyre wires.

Thereby, due to the compression, a denser unit is obtained which is easier to handle at the site of the induction furnace compared to eg loose tyre wires. The denser briquette unit also has a core of a size enabling that it is receptive to induction and thereby capable of being molten in connection with inductive melting. That would not be possible without the briquetting since both the tyre wires and the metal shavings would float atop the molten metal scrap material in the induction furnace, them having, in bulk form, a core which is too small for responding efficiently to induction.

During the forming of a briquette as described above, tyre wire is utilised optimally which is favourable both from a financial and an environmental point of view, tyre wire being an inexpensive waste product of a high quality due to a lower level of manganese compared to metal waste in general.

By the manufacture of a briquette consisting of tyre wire and metal shavings, an inductively meltable unit is also produced which does not discharge toxic fumes and odour during melting - as opposed to inductive melting of the raw products alone or combined prior to briquetting. This is a major advantage to the environment and to the health aspect.

By addition of the metal shavings, a denser unit is produced which may be molten without a large amount of fumes being generated from the rubber coming from the tyre wire, since that smoke is minimized ia by the added metal shavings. The shavings have the further effect that they contribute to keeping the tyre wire locked in compressed form. Without the metal shavings, the briquette consisting of tyre wire only would disintegrate again as the resilient effect of the tyre wire brings about the effect that the briquette cannot remain in its compressed form without the metal shavings. The only way of ensuring that a briquette stays in its compressed form without the metal shavings is by using considerably more powerful compression forces which, in turn, would require somewhat powerful production equipment. This would, in turn, be tantamount to increased costs from a manufacturing point of view and would impose an increased impact on the environment. These are all drawbacks that are taken into account by the present invention.

Finally, the addition of metal shavings entails that, in connection with the melting of the briquettes, the briquette compressor will incur less wear, the metal shavings having a lubricant effect.

In summary, tyre wire and metal shavings are never the direct choice in connection with induction melting due to the poor melting properties of the raw materials and the development of heavy fumes and odour. By the briquette formation as described above, however, it is now possible to use a high-quality product to advantage which would otherwise most often end up as a waste product.

According to one embodiment, the method further comprises that mixture of said tyre wire and said metal wire until a homogeneous mixture is obtained is performed by means of scraping. The scraping and the admixture are considerably more optimal than existing admixture methods from an energy consumption point of view.

According to one embodiment, the method further comprises that other metal waste products are added to said mixture prior to compression of the briquette, whereby said metal waste products become fixated in the briquettes thereby enabling subsequent induction melting.

According to one embodiment, the method further comprises addition of ingredients from the group of coal dust, grinding dust, or steel shot prior to compression of the briquette. Precisely due to the compression and the formation of a unit, one may now also use those very small metal pieces. Thereby it is now also possible to recycle products in dust shape that are usually unfit for use.

According to one embodiment, the ingredients are compressed to a casting briquette having a density of above two tons/m³, preferably above three tons/m³. Thereby a density is obtained which is suitable for induction melting.

According to one embodiment, 25 % - 85 % of tyre wire, alternatively 50 % - 80 % of tyre wire, 65 % - 80 % of tyre wire, 70 % - 80 % of tyre wire, or - again alternatively - 75 % of tyre wire of the total amount of ingredients, by weight of tyre wire, have been added. Precisely that amount of tyre wire relative to the remainder of the material has proven to be particularly convenient for obtaining balance relative to the remaining material in the briquette whereby fumes are minimized and induction properties are optimized when the briquette is subject to melting.

According to one embodiment, 15 % - 75 % of metal shavings, alternatively 20 % - 50 % of metal shavings, 20 % - 35 % of metal shavings, or - again alternatively - 25 % of metal shavings, of the total amount of ingredients, are added. Precisely that amount of metal shavings relative to the remainder of the material has proven to be particularly convenient for obtaining balance relative to the remaining material in the briquette whereby fumes are minimized and induction properties are optimized when the briquette is subject to melting.

According to one embodiment, the metal shavings are cast iron shavings. Cast iron shavings containing carbon, the addition of cast iron shavings mean that the mixture has a lubricating effect *per se.* This is favourable, since the lubricating effect prolongs the longevity of the briquette compressor. Graphite in powder shape, optionally in combination with silicon as silicon carbide (SiC), may also advantageously be added to the briquette mixture, it serving the function of lubricant and acting as "dry lubricating oil" that reduces the friction between mechanical parts during the compression process.

According to one embodiment ingredients from the group of coal dust, grinding dust, steel shot or corresponding products are added, up to a total of the ingredients.

Besides, the invention relates to a briquette made in accordance with a method according to the above, and a briquette having a density of above two tons/m³, preferably three tons/m³.

### FIGURES

In the following, the invention will be described in further detail with reference to the figures, wherein:
Figure 1 shows a method for the manufacture of a briquette according to the invention;
Figures 2A-B show an embodiment of a scraper for mixing the briquette raw material;
Figures 3A-B show an alternative embodiment of a scraper for mixing the briquette raw material;
Figure 4 show a briquette according to the invention; and
Figure 5 show the melting in an induction melting furnace of a briquette according to the invention.

### DESCRIPTION OF EXEMPLARY EMBODIMENTS

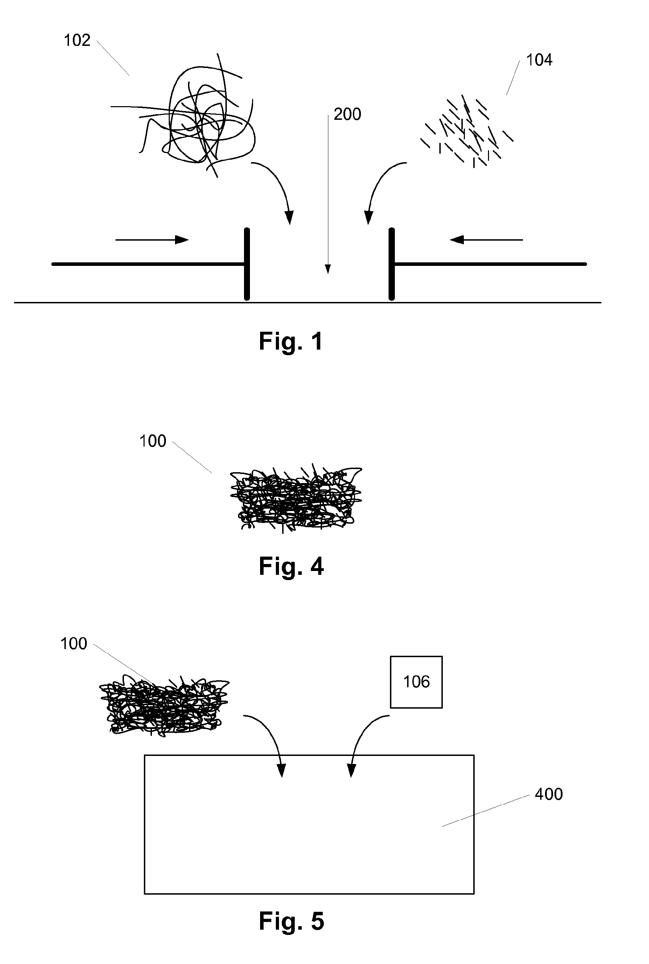

Figure 1 shows a schematic illustration of a method for the manufacture of a briquette 100 according to the invention. The briquette as such is shown in figure 4. Material comprising ia tyre wire 102 and metal shavings 104 are supplied to a briquette compressor 200, following which they are compressed to form a briquette 100. The compression as such may, in a preferred embodiment, take place in such a manner as to form a briquette 100 having a density of above two tons/m³, preferably above three tons/m³.

Tyre wire is the metal waste produced when tyres from vehicles, including both cars and trucks, are granulated. Tyre wire is an inexpensive waste product of high quality due to a lower content of manganese compared to metal waste in general. Tyre wire 102 consists of a lot of small single strands that are tangled which imparts a low density to the product.

The metal shavings 104 are a non-tangled product and are present in simple, easily distributable units that are relatively readily admixable with products for providing a uniform homogeneous mixture. The metal shavings 104 may ia be steel shavings, cast iron shavings or the like.

The added material consisting of ia tyre wire 102 and metal shavings 104 may be mixed in a scraper 300 prior to being compressed to form a briquette 100. It is essential that the tyre wire 102 is untangled/separated or similar in one way or another, tyre wire 102 being a very tangled product that cannot be admixed efficiently with other products, such as metal shavings 104 unless it is untangled. If not untangled, it is very difficult to obtain a uniform homogeneous mixture which is compressed to form a briquette. One way of untangling tyre wire 102 is by means of a so-called scraper.

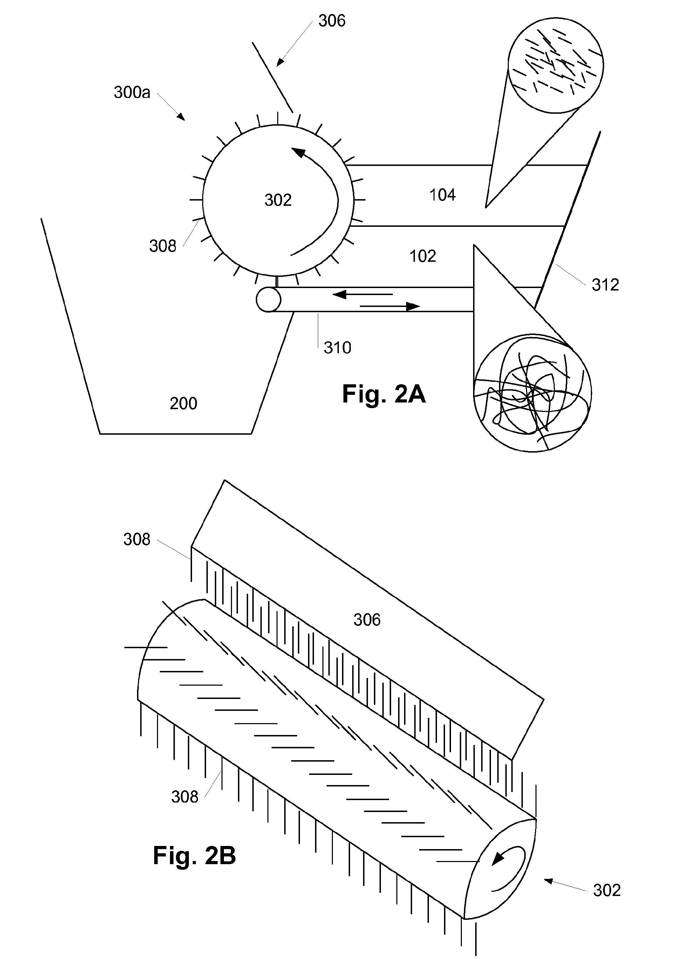

A scraper 300a for mixing the tyre wire 102 and the metal shavings 104 is shown in figure 2, wherein the A-figure shows the scraper 300a seen from the side, and the B-figure shows the drum 302 and the stationary plate 306 in the scraper, seen at an isometric angle.

The scraper 300a consists of a lower drum 302, an upper stationary plate 306 and a container 312 with a conveyor belt 320 at the bottom. The material to be mixed is put into the container 312 and is conveyed to the drum 302 and the stationary plate 306 by means of the conveyor belt 310. To obtain the most homogenous mixture of tyre wire 102 and metal shavings, the tyre wire 102 is first to be distributed evenly at the bottom of the container 312, and the shavings 104 are added as an upper layer on top of the tyre wire 102.

The lower drum 302 and the stationary plate 306, which is shown herein as a plate in figures 2A-B, have rows of pegs 308 that are made of a material which is capable of withstanding the pressure from the materials that are tp be scraped out - for instance, the pegs 308 may be made of iron or other metal.

The lower drum 302 rotates about its own axis as shown in figures 2A-b and in this way sees to it that the tyre wires 102 and the metal shavings 104 are picked up and conveyed through the comparatively narrow area between the drum 302 and the plate 306.

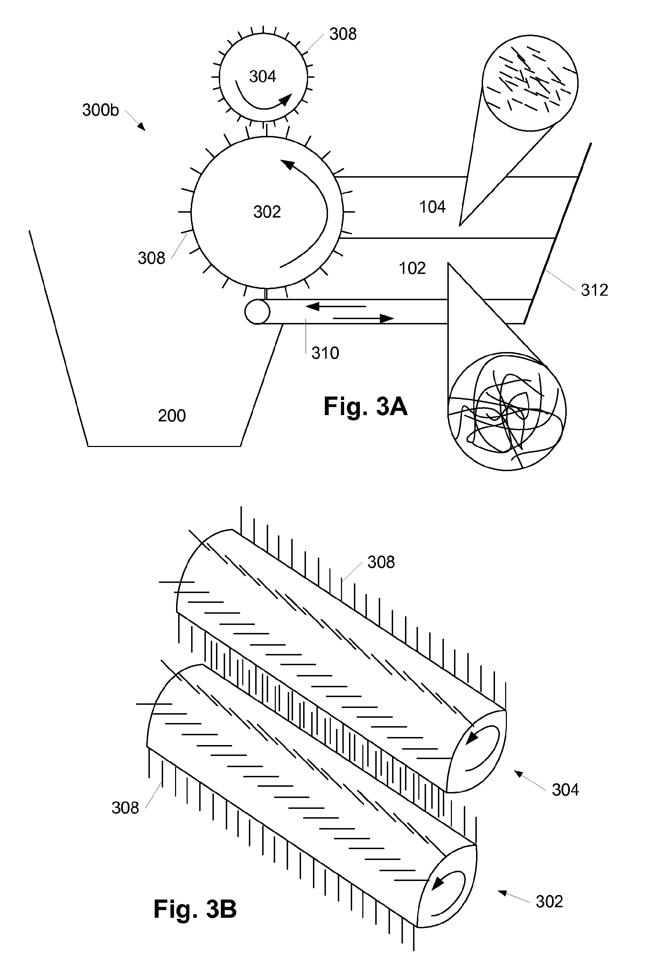

Figures 3A-B show an alternative version of the scraper 300b, wherein the upper stationary plate 306 has been replaced by an upper drum 304 that rotates about its own axis as shown in the figure. Alternative embodiments of the scraper 300 may also occur.

The scraping and the mixing as shown in figures 2-3 take place far more optimally from an energy consumption point of view compared to existing mixing methods.

In the compression mould 200 and/or in the container 312 in the scrapers 300a, 300b, it is also an option to supply, in addition to tyre wire 102 and metal shavings 104, ingredients from the group of coal dust, grinding dust, steel shot or other. Graphite in powder form, optionally in combination with silicon as silicon carbide (SiC), may also advantageously be added to the briquette mixture, as it serves the function of lubricant and acts as "dry lubricating oil" that reduces the friction between mechanical parts during the compression process. This prolongs the longevity of the briquette compressor 200. If the metal shavings are cast iron shavings, they already contain silicon carbide.

The above types of grinding agents are materials that are not normally used in bulk for induction melting, as they will be sucked away by the powerful extraction and, for that reason, it cannot be added to the melting process.

The briquette mixing ratio of the amount of added tyre wire 102 to metal shavings 104 may vary depending on the subsequent use of the briquette 100.

According to a preferred embodiment, 75 % of tyre wire 102 and 25 % of shavings 104, in proportion by weight, optionally supplemented with ingredients from the group of coal dust, grinding dust, steel shot or other are added.

According to a further preferred embodiment, 25 - 50 % of tyre wire and 75 - 50 % of shavings, in proportion by weight, are added, optionally supplemented with ingredients from the group of coal dust, grinding dust, steel shot or other.

According to a further preferred embodiment, 50 - 75 % of tyre wire and 25 - 50 % of shavings, in proportion by weight, are added, optionally supplemented with ingredients from the group of coal dust, grinding dust, steel shot, or other.

Apart from the above-mentioned additives which primarily have a lubricating effect, other metal waste products may also be added to the briquette mixture prior to compression of the briquette. Examples of such waste products may include steel waste produced in the machining of steel elements. Normally, such waste productions are subject to waste deposition as they do not themselves have a core which is large enough for being melted efficiently by induction melting. By adding those waste products to the briquette mixture they become temporarily fixated in the briquettes, thereby enabling subsequent induction melting.

By manufacturing a briquette of the above materials, remelting of waste products by means of induction melting is therefore enabled, which would otherwise be impossible due to a too low density of the products and an ensuing absence of a metal core for responding to induction.

Figure 5 shows the melting (schematically) of a briquette in an induction melting furnace 400. In addition to the briquette 100 as such, it is an option to further supply other material 106 comprising ordinary steel scrap and graphite directly to the induction melting furnace 400.

The melting of the briquettes 100 normally takes place at a temperature of about 1500 degrees centigrade. The tyre wire 102 being compressed to a briquette 100, the tyre wire may be melted in the induction melting furnace 400 without the development of fumes or discharge of environmentally hazardous gasses in amounts that exceed the threshold values that apply within this field.

When using tyre wire 102 for manufacturing the briquettes, it becomes possible to recycle a high-quality product that occurs as a matter of course when tyres are discarded for subsequent casting of steel pieces in an entirely conventional way. This is advantageous since high-quality steel with a low content of manganese is both expensive and hard to come by in large amounts. Moreover, the recycling of the tyre wire is advantageous from an environmental point of view.

Textile and the rubber remains sitting on the tyre wire 102 will be separated off following the induction melting of the briquettes 100 in the form of slag before the melted briquettes 100 are subsequently used for the casting.

### REFERENCES

- 100: Briquette
- 102: Tyre wire
- 104: Metal shavings
- 106: Other material for melting
- 200: Briquette compressor
- 300: Scraper
- 302: Lower drum
- 304: Upper drum
- 306: Stationary drum
- 308: Drum pegs
- 310: Conveyor belt
- 312: Scraper container
- 400: Induction melting furnace

## Claims

1. A method of forming a briquette (100) for use for inductive melting in an induction furnace in connection with subsequent casting of metal pieces, wherein the briquette (100) comprises tyre wire (102) and metal shavings (104), whereby the method comprises the following steps:
- mixture of said tyre wire and said metal wire until a homogenous mixture is obtained; and
- compression of said homogeneous mixture to form a compressed briquette.

2. A method according to claim 1, whereby mixture of said tyre wire and said metal wire, until a homogeneous mixture is obtained, is performed by means of scraping.

3. A method according to claims 1-2, whereby, for said mixture of tyre wire and metal shavings, ingredients are added from the group of coal dust, grinding dust, or steel shot prior to compression of the briquette.

4. A method according to any one of the preceding claims, whereby, to said mixture, other metal waste products are further added prior to compression of the briquette, whereby said metal waste products become fixated in the briquettes, thereby enabling subsequent induction melting.

5. A method according to any one of the preceding claims, whereby a briquette is compressed having a density of above two tons/m³.

6. A method according to any one of the preceding claims, whereby a briquette is compressed having a density of above three tons/m³.

7. A method according to any one of the preceding claims, whereby 25 % - 85 % of tyre wire, alternatively 50 % - 80 % of tyre wire, 65 % - 80 % of tyre wire, 70 % - 80 % of tyre wire, or - again alternatively - 75 % of tyre wire, by weight, are added.

8. A method according to any one of the preceding claims, whereby 15 % - 75 % of metal shavings, alternatively 20 % - 50 % of metal shavings, 20 % - 35 % of metal shavings, or - again alternatively - 25 % of metal shavings, by weight, are added.

9. A method according to any one of the preceding claims, whereby the metal shavings are cast-iron shavings.

10. A briquette made by a method according to claims 1 - 9.

11. A briquette according to claim 10, wherein the briquette has a density of above two tons/m³.

12. A briquette according to claim 10 or 11, wherein the briquette has a density of above three tons/m³.
